# EUROPÄISCHE PATENTSCHRIFT

(11) **EP 2 993 140 B1**
(45) Veröffentlichungstag und Bekanntmachung des Hinweises auf die Patenterteilung: **21.02.2018**
(21) Anmeldenummer: 15002525.2
(22) Anmeldetag: 26.08.2015
(51) Int. Cl.: B65B 61/00, B65B 19/02, B65B 59/00, B65B 59/04, B65B 61/28, B65B 35/20, B65G 47/82, B65B 19/22, B65B 61/24

(54) **VERFAHREN UND VORRICHTUNG ZUR FORM-STABILISIERUNG VON PACKUNGEN**
METHOD AND DEVICE FOR FORM STABILIZATION OF PACKAGES
PROCEDE ET DISPOSITIF DE STABILISATION DE FORME D'EMBALLAGES

(30) Priorität: 08.09.2014 DE 102014012968
(43) Veröffentlichungstag der Anmeldung: 09.03.2016
(73) Patentinhaber: Focke & Co. (GmbH & Co. KG), 27283 Verden (DE)
(72) Erfinder: Blome, Hermann, 27337 Blender-Einste (DE); Roesler, Burkard, 27337 Blender (DE)
(74) Vertreter: Bolte, Erich

(56) Entgegenhaltungen:
- EP-A1- 0 317 805
- EP-A1- 0 437 201
- EP-A1- 0 867 372
- EP-A1- 0 931 725
- EP-A2- 0 197 368
- EP-A2- 0 243 757
- GB-A- 2 250 257

## Beschreibung

Die Erfindung betrifft ein Verfahren gemäß Oberbegriff des Anspruchs 1 zur Formgebung bzw. Formstabilisierung von Packungen. Weiterhin bezieht sich die Erfindung auf eine Vorrichtung mit dem Oberbegriff des Anspruchs 6.

Bei der Fertigung von Packungen aus (dünnem) Karton oder vergleichbarem Packstoff mit durch Klebung, insbesondere durch Kaltleim, verbundenen Faltlappen besteht ein Problem hinsichtlich der Schaffung und Erhaltung bzw. Stabilisierung der exakten Packungsform. Dies gilt insbesondere für quaderförmige Packungen, vornehmlich für solche des Typs Klappschachtel bzw. Hinge Lid.

Es ist bekannt, die fertiggestellten Packungen zum Abbinden der Leimverbindungen durch einen langgestreckten Formkanal hindurchzufördern, der die Packungen im Bereich von Vorderwand, Rückwand und Seitenwänden umgibt. Eine Mehrzahl derartiger Formkanäle ist an einem Trockenförderer angebracht, insbesondere an einen drehend angetriebenen Trockenrevolver.

Die Vorrichtung gemäß EP 0 437 201 dient vorrangig zur Herstellung von Zigarettenpackungen des Typs Weichbecher. Eine Mehrzahl von Packungen befindet sich jeweils in einem von mehreren Trockenschächten. Die Packungen werden an der einen Seite in den Formkanal eingeschoben und treten aufgrund einer Schubförderung durch wechselseitige Abstützung und Druckübertragung nacheinander gegenüberliegend aus einer Austrittsöffnung aus. Die Wirkung dieser bekannten Technologie ist hinsichtlich der Formstabilisierung der Packungen unbefriedigend.

Bekannt sind auch Verpackungsmaschinen, bei denen quaderförmige Zigarettenpackungen nach Fertigstellung in achsparallele Taschen eines Trockenrevolvers eingeführt werden und in dieser Vorrichtung für längere Zeit verweilen, nämlich während mehrerer Umdrehungen des Trockenrevolvers. Die Zigarettenpackungen werden durch Schuborgane in achsparalleler Richtung zum Trockenrevolver in die Taschen desselben eingeschoben, wobei die Schubkraft von Packung zu Packung innerhalb einer Dichtreihe derselben übertragen wird. In gleicher Weise werden die aneinanderliegenden Packungen im Bereich einer Ausschubstation innerhalb der Taschen verschoben, sodass jeweils eine endseitige Packung ausgeschoben wird. Die Belastung der Packungen durch unmittelbare Übertragung der Schubkraft von einer Packung zur nächsten ist nachteilig für die Formerhaltung, insbesondere im Bereich des Einschubs in die Taschen des Trockenrevolvers.

Der Erfindung liegt die Aufgabe zugrunde, Maßnahmen vorzuschlagen für eine verbesserte Handhabung von Packungen während des Abbindens von Leimverbindungen, insbesondere für die Handhabung von (Zigaretten-)Packungen des Typs Klappschachtel/Hinge Lid.
Zur Lösung dieser Aufgabe wird das Verfahren gemäß Anspruch 1 angewendet.
Der Erfindung liegt die Erkenntnis zugrunde, dass bei dem Transport der Packungen durch den Formkanal mittels wechselseitiger Druckübertragung unerwünschte Verformungen der Packungen und damit Beeinträchtigungen der Leimverbindungen nicht zu vermeiden sind. Bei der erfindungsgemäßen Vorgehensweise werden die Packungen drucklos bzw. kontaktlos, insbesondere mit Abstand voneinander, aufeinanderfolgend taktweise durch den Formkanal hindurch transportiert.
Bei der konkreten Umsetzung wird so vorgegangen, dass für jeden Fördertakt jeder Packung in einem Formkanal gesonderte Förderorgane wirksam werden, die insbesondere an einer Rückseite der Packung - Stirnwand oder Bodenwand - ansetzen und die Packung durch Förder- bzw. Schubbewegung um einen Bewegungstakt weitertransportieren.

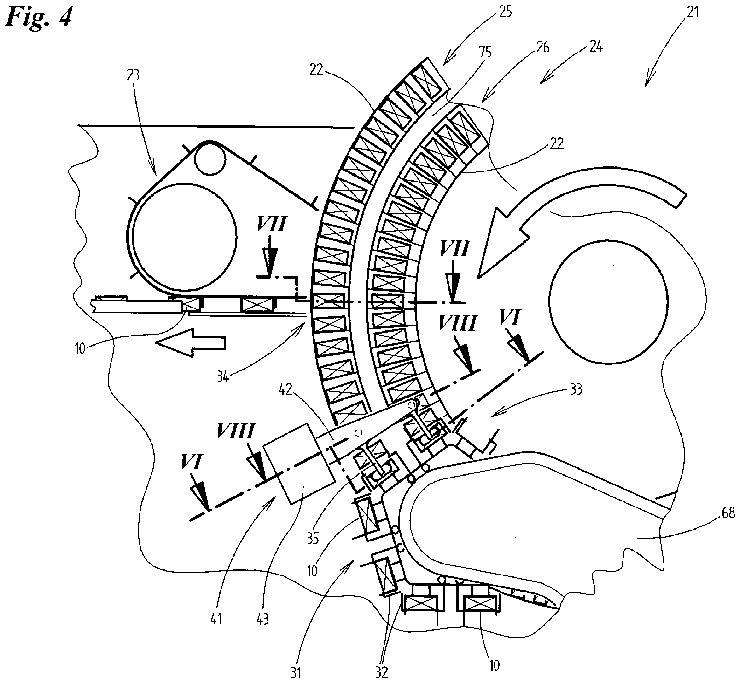

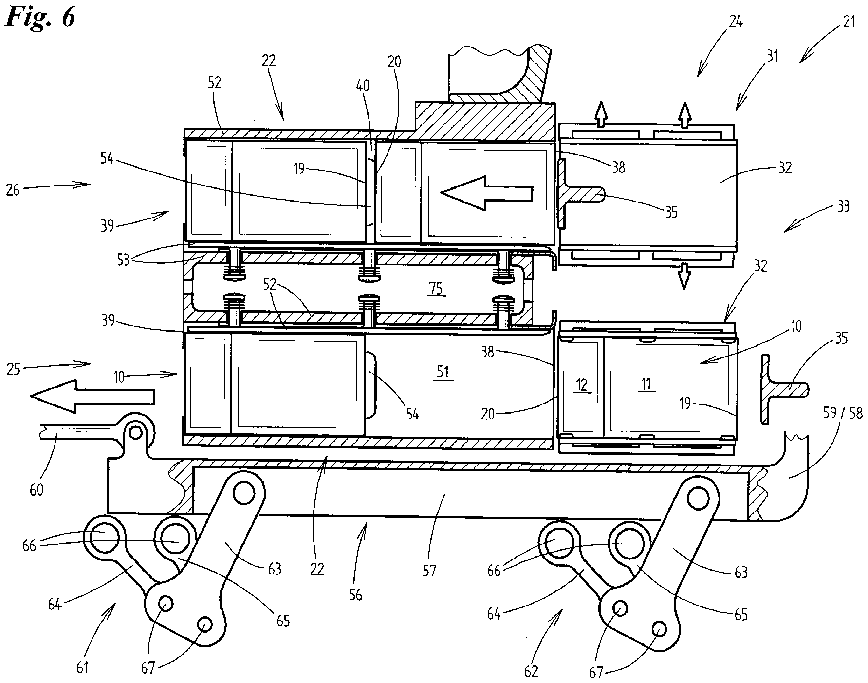

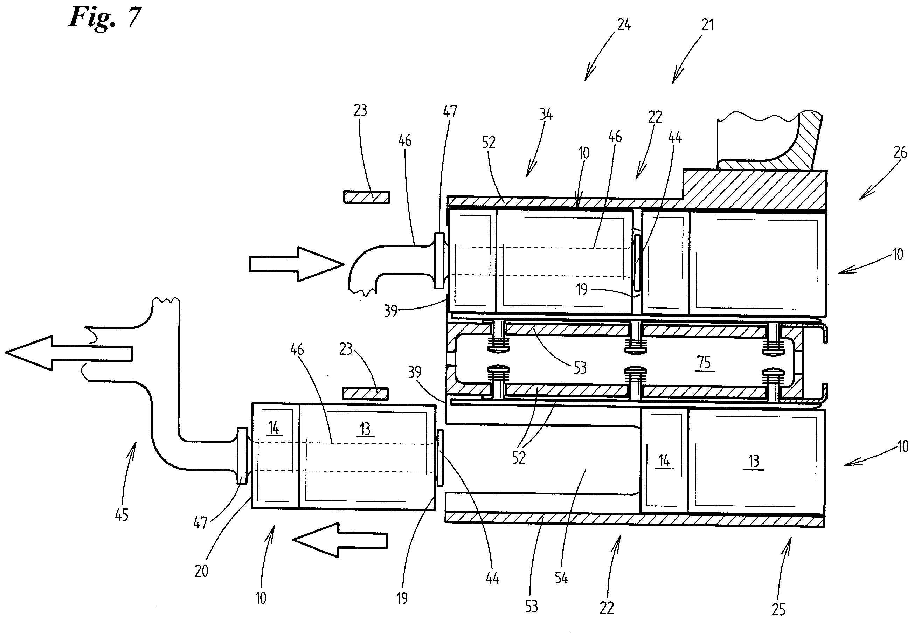

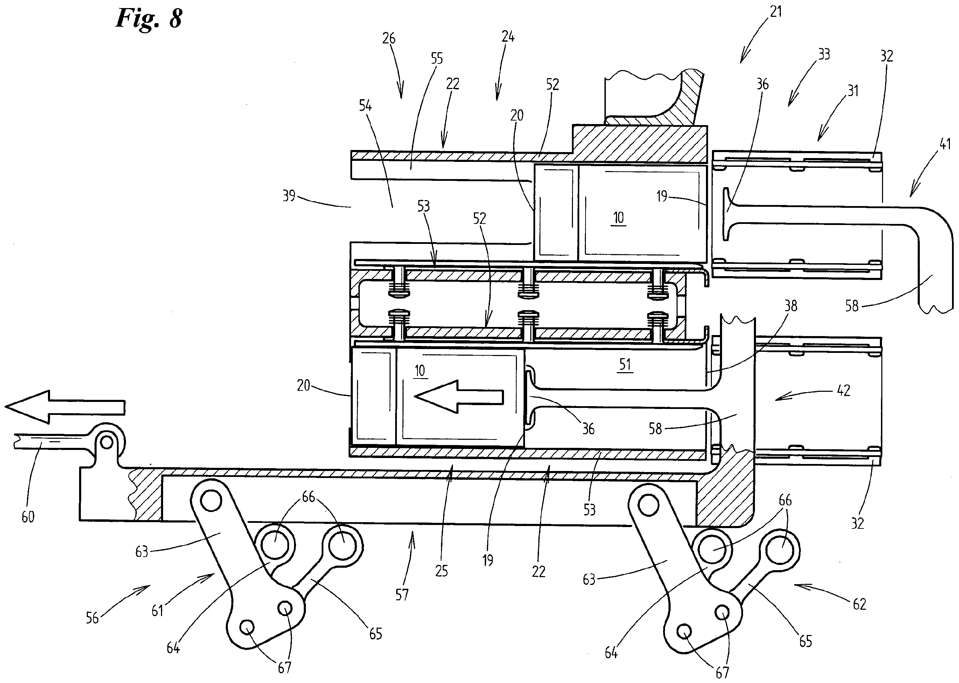

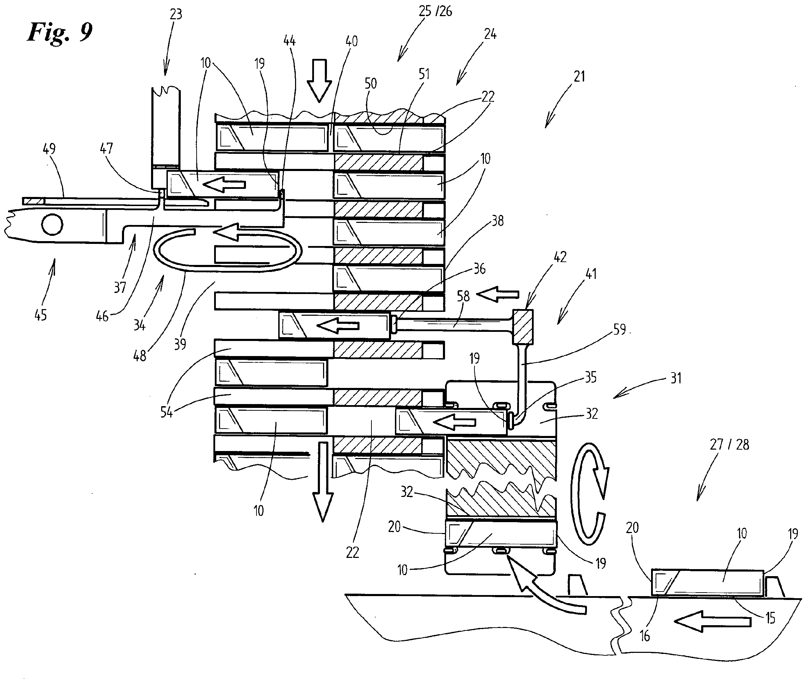

Eine weitere Besonderheit besteht darin, dass die Formkammern bzw. Formkanäle hinsichtlich des Querschnitts bzw. der Querschnittsabmessung veränderbar sind, vorzugsweise durch Verstellung mindestens einer an Seitenwänden der Packungen anliegenden, Wandung des Formkanals. Insbesondere sind an mindestens einer Seitenwand jedes Formkanals verstellbare oder auswechselbare streifenförmige Distanz- bzw. Ausgleichsstücke angeordnet zur Veränderung des Querschnitts bzw. der Abmessung des betreffenden Formkanals.
Auch besteht eine Besonderheit der erfindungsgemäßen Vorrichtung darin, dass ein Übergabeförderer (Übergaberevolver) zur Zuführung der Packungen von einer Packungsbahn zum Trockenförderer bzw. Trockenrevolver verstellbar gelagert ist, insbesondere an einem Schwenkarm und durch diesen aus einer Arbeitsstellung in eine Handhabungs- bzw. Auswechselposition bewegbar ist.
Weitere Besonderheiten und Details der Erfindung werden nachfolgend anhand der Patentzeichnungen näher erläutert. Es zeigt:

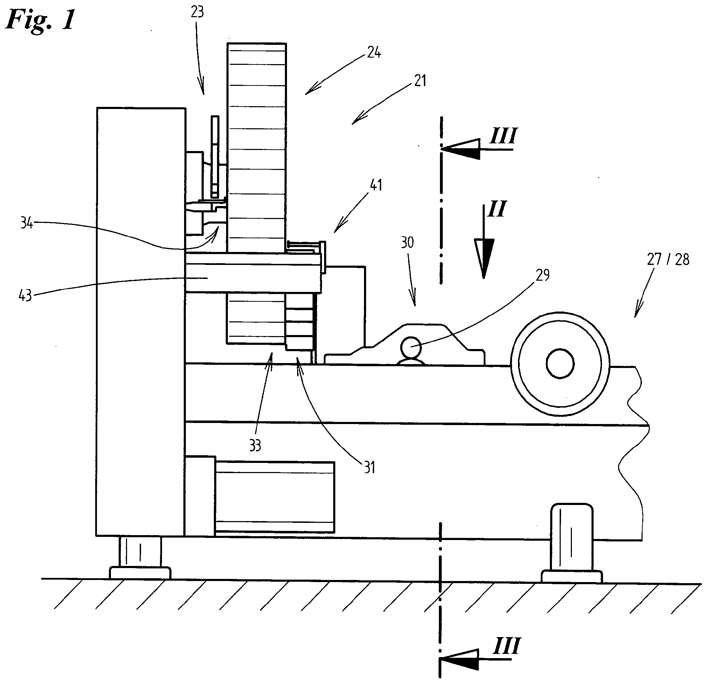

- Fig. 1: einen Ausschnitt einer Vorrichtung zum Herstellen von Packungen, nämlich eine Form- bzw. Trockenstation in schematischer Seitenansicht,

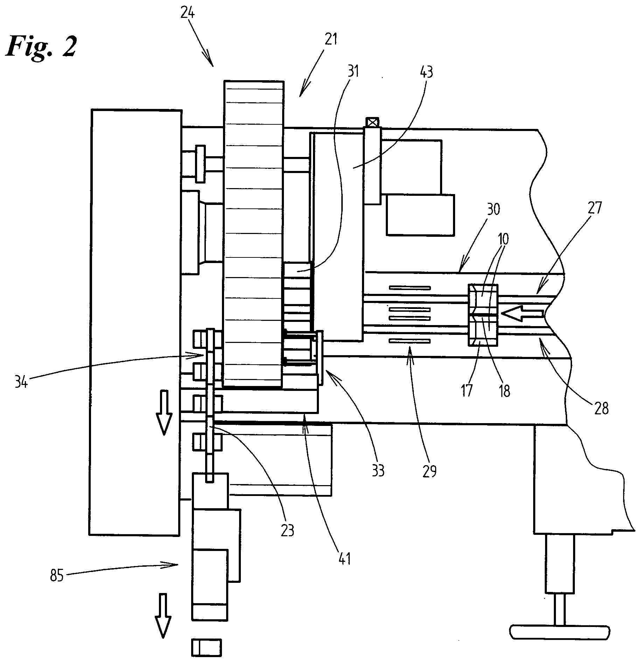

- Fig. 2: eine Draufsicht auf die Einzelheit gemäß Fig. 1 entsprechend Pfeil II,
- Fig. 3: eine Queransicht bzw. einen Querschnitt der Einzelheit gemäß Fig. 1 in der Schnittebene III-III,
- Fig. 4: einen Ausschnitt IV der Darstellung in Fig. 3 in vergrößertem Maßstab,
- Fig. 5: eine Darstellung analog Fig. 3 bei veränderter Stellung eines Aggregats,
- Fig. 6: einen (radial gerichteten) Schnitt durch einen Trockenrevolver in der Schnittebene VI-VI der Fig. 4, in vergrößertem Maßstab,
- Fig.7: ein weiterer Schnitt VII-VII der Einzelheit gemäß Fig. 4, in vergrößertem Maßstab,
- Fig. 8: ein Schnitt in der Ebene VIII-VIII der Fig. 4, in vergrößertem Maßstab,
- Fig.9: eine schematische Darstellung eines Ausschnitts eines Trockenrevolvers, teilweise im Umfangsschnitt, mit Zu- und Abführung von Packungen,

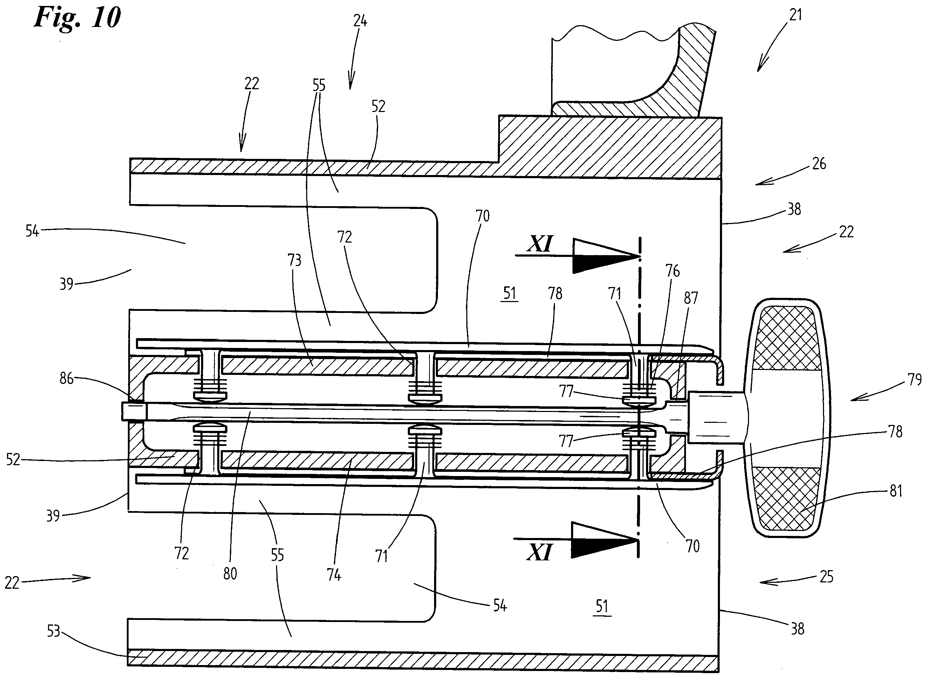

- Fig. 10: eine Detaildarstellung von zwei aufeinanderfolgenden bzw. benachbarten Formkammern im Schnitt, in vergrößertem Maßstab,
- Fig. 11: einen Querschnitt XI-XI der Fig. 10,

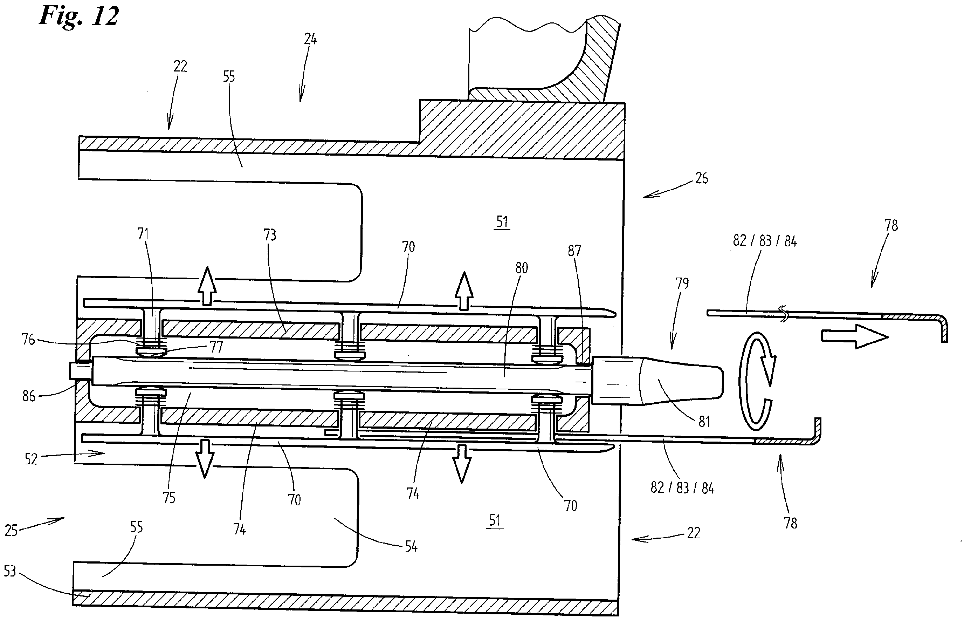

- Fig. 12: eine Darstellung analog Fig. 10 bei veränderter Darstellung eines Werkzeugs.
Die in den Zeichnungen dargestellten Beispiele befassen sich mit der Handhabung und Behandlung von quaderförmigen Packungen 10. Konkret handelt es sich um Zigarettenpackungen 10 des Typs Klappschachtel/Hinge Lid. Diese bestehen aus insbesondere dünnem Karton und weisen Faltlappen auf, die mittels aushärtbarer Verbindungsmittel verbunden sind, insbesondere mit Kaltleim.
Die Packung 10 besteht üblicherweise aus Schachtelteil 11 und Deckel 12. Diese bilden eine Vorderseite mit Schachtel-Vorderwand 13 und Deckel-Vorderwand 14. Gegenüberliegend befinden sich Schachtel-Rückwand 15 und Deckel-Rückwand 16. Seitlich sind die Packungen 10 durch schmale Seitenwände 17, 18 des Schachtelteils 11 und des Deckels 12 begrenzt. Der Schachtelteil 11 bildet eine Bodenwand 19 und der Deckel 12 eine Stirnwand 20. Durch Klebung miteinander verbundene Faltlappen befinden sich insbesondere im Bereich der Seitenwände 17, 18 (miteinander verbundene Seitenlappen), möglicherweise aber auch im Bereich von Bodenwand 19 und Stirnwand 20. Weiterhin kann ein bei diesem Packungstyp üblicher Kragen innerhalb der Packung durch Leimverbindungen fixiert sein.
Die so oder in anderer Weise ausgebildeten Packungen 10 werden in einer Verpackungsmaschine bekannter Bauart fertiggestellt und mit noch nicht fixierten bzw. noch nicht (vollständig) ausgehärteten Leimverbindungen einer Form- und Trockenstation 21 zugeführt. In dieser werden die Packungen 10 unter Aufrechterhaltung bzw. Schaffung einer korrekten Packungsform bis zum Abbinden der Leimbereiche in formgebenden Halterungen, vorliegend in Formkammern bzw. Formkanälen 22, für eine ausreichende Verweildauer aufgenommen. Nach Stabilisierung werden die Packungen 10 an einen Abförderer 23 übergeben und abtransportiert.
Eine Mehrzahl von Formkanälen 22 ist in paralleler Ausrichtung an einem Endlosförderer angeordnet, bei dem vorliegenden Ausführungsbeispiel als Kanalkranz an einem Trockenrevolver bzw. Trockenrad 24. Dieses ist zur Erhöhung der Leistungsfähigkeit bzw. für eine zweibahnige Betriebsweise der Anlage mit zwei Kanalkränzen 25, 26 versehen, je mit einer größeren Anzahl von Formkanälen 22. Die Kanalkränze 25, 26 sind konzentrisch zueinander angeordnet, jeweils mit radialer Ausrichtung der benachbarten Formkanäle 22, die demnach paarweise bereitgestellt werden. Das so ausgebildete Trockenrad 24 ist taktweise drehend angetrieben, insbesondere derart, dass der Bewegungstakt den Abmessungen der Formkanäle 22 entspricht, sodass diese aufeinanderfolgend unterschiedlichen Stationen zugeführt werden. Die achsparallel angeordneten Formkanäle 22 sind an beiden Enden offen.
Die weitgehend, aber noch nicht komplett fertiggestellten Packungen 10 werden entlang zweier Packungsbahnen 27, 28 paarweise der Form- und Trockenstation 21 zugeführt. In einem letzten Faltschritt werden außenliegende Seitenlappen zur Bildung der Seitenwände 17, 18 mit Leim versehen, vorliegend mit Hilfe von Leimrädern 29 im Bereich einer Beleimungsstation 30. Danach werden die Faltlappen unter Bildung der Seitenwände 17, 18 gegeneinander gefaltet. Die nun fertiggestellten Packungen 10 werden an das Trockenrad 24 übergeben.
Die Packungen 10 werden auf der Packungsbahn 27, 28 durch ein Übergabeorgan erfasst und in eine Position zur Einführung bzw. zum Einschub in einen zugeordneten Formkanal 22 bereitgehalten. Das Übergabeorgan ist vorliegend ein Übergaberevolver 31, der in einer parallelen insbesondere aufrechten Ebene zum Trockenrad 24 in unmittelbarer Nachbarschaft zu diesem taktweise drehend gelagert ist.
Der Übergaberevolver 31 ist vorzugsweise entsprechend Darstellung und Beschreibung in EP 0 317 805 A1 ausgebildet, also mit einer polygonartigen Kontur und jeweils Taschen 32 für je eine Packung 10. Wegen der zweibahnigen Betriebsweise ist der Übergaberevolver 31 mit zwei nebeneinanderliegenden Taschen 32 versehen, die hinsichtlich der Relativstellung einerseits auf die Packungsbahnen 27, 28 und andererseits auf die Stellung der Formkanäle 22 ausgerichtet sind. Der Übergaberevolver 31 ist oberhalb der Packungsbahnen 27, 28 positioniert, derart, dass jeweils zwei Packungen 10 auf den Packungsbahnen 27, 28 erfasst und durch entsprechende Drehbewegung in eine Übergabestation 33 gefördert werden, in der die zwei Packungen 10 auf zugeordnete Formkanäle 22 der beiden Kanalkränze 25, 26 ausgerichtet sind (Fig. 4). Zwei in radialer Richtung benachbarte Formkanäle 22 werden demnach in der Übergabestation 33 mit Packungen 10 beschickt.
Die behandelten, insbesondere hinsichtlich der Leimverbindungen fertiggestellten Packungen 10 werden an einer Ausschubstation 34 aus dem zu entleerenden Formkanal 22 bzw. aus den zwei gleichzeitig beaufschlagten Formkanälen 22 entnommen und an den Abförderer 23 übergeben. Die Ausschubstation 34 befindet sich vorzugsweise in einer horizontalen Mittelebene des Trockenrads 24. Die Übergabestation 33 ist in Drehrichtung nachfolgend, also bei einer in Fig. 4 gezeigten Drehung des Trockenrads 24 entgegen dem Uhrzeigersinn unterhalb der Ausschubstation 34 positioniert. In der Abfolge werden demnach zunächst die Packungen 10 aus dem Formkanal 22 herausgefördert und danach entsprechend neue, zu behandelnde Packungen 10 in die Formkanäle 22 eingeführt.
Die Packungen 10 werden vorliegend mittels mechanischer Organe in die Formkanäle 22 eingeführt und ebenfalls mit mechanischen Förderorganen aus diesen abgefördert. Im Bereich der Übergabestation 33 werden Packungen 10 aus den Taschen 32 des Übergaberevolvers 31 abgefördert und in einem gemeinsamen Fördertakt an die unmittelbar benachbarten Formkanäle 22 übergeben.
Die Transportmittel für die taktweise bewegbaren Packungen 10 sind als Stößel 35, 36 bzw. als Schieber 37 ausgebildet. Die Packungen werden durch den Übergaberevolver 31 in der Übergabestation 33 so präsentiert, dass ein erster Stößel 35 die zwei nebeneinander liegenden Packungen 10 an einer freien Packungsseite, vorliegend an der Bodenwand 19 erfassen. Durch entsprechende Querbewegung (Pfeil in Fig. 9) wird die betreffende Packung 10 aus der Tasche 32 aus- und über eine Eintrittsöffnung 38 in den Formkanal 22 eingeschoben. Entsprechend dem besonderen Handhabungsverfahren wird die Packung 10 durch dieses erste Förderorgan - Stößel 35 - in eine erste, eintrittsseitige Stellung innerhalb des Formkanals 22 bewegt. In dieser Einschubstellung liegt die Packung 10 mit der freien Seite - Bodenwand 19 - etwa bündig mit der Eintrittsöffnung 38 des Formkanals 22.
Die Handhabung der Packungen 10 im Bereich der Formkanäle 22 ist in besonderer Weise gelöst, derart, dass die Packungen 10 während mehrerer Arbeits- bzw. Fördertakte und entsprechender Anzahl von Drehungen des Trockenrads 24 in den Formkanälen 22 verbleiben. In einem ersten Fördertakt gelangen die Packungen 10 in die Einschubstellung und danach in einem weiteren Fördertakt in die Ausschubstellung. Bei entsprechender Bemessung der Formkanäle 22 ist eine Zwischenstellung der Packungen 10 innerhalb eines Formkanals 22 möglich, sodass sich drei in Längsrichtung aufeinanderfolgende Packungen 10 in einem Formkanal 22 befinden. Die Packung 10 an der Austrittsseite des Formkanals 22 ist vorzugsweise bündig mit einer Austrittsöffnung 33. Die Packungen 10 werden zwei aufeinanderfolgenden Fördertakten ohne wechselseitige Druckübertragung, also ohne druckübertragende Anlage der Wandungen 19, 20 aneinander, transportiert. Bei dem vorliegenden Ausführungsbeispiel ist zwischen den aufeinanderfolgenden Packungen 10 ein Abstand 40 gebildet.
Bei dem ersten Fördertakt werden die Packungen 10 von einem ersten Stößel 35 aus den Taschen 32 des Übergaberevolvers 31 aus- und in den benachbarten Formkanal 22 eingeschoben. Der Bewegungstakt des Stößels 35 ist so bemessen, dass die Packungen 10 die beschriebene eintrittsseitige erste Position einnehmen (Fig. 6, Fig. 8). Ein weiteres Förderorgan, Stößel 36, fördert in einem nachfolgenden Arbeitsschritt die Packung 10 aus der eingangsseitigen Position in die austrittsseitige, zweite Stellung, und zwar ebenfalls durch einen entsprechend begrenzten Fördertakt der hin- und herbewegbaren Stößel 36. Die an der Eintrittsseite der Formkanäle 22 wirksamen Förderorgane - Stößel 35, 36 - sind so ausgebildet, dass die beiden in einer Radialebene nebeneinander liegenden Formkanäle 22 der Kanalkränze 25, 26gleichzeitig beschickt werden. Des Weiteren wird zeitgleich durch den Stößel 36 der nachfolgende Fördertakt für die Packungen 10 - Verschiebung innerhalb der Formkanäle 22 - ausgeführt. Zu diesem Zweck ist eine Schubeinheit 41 vorgesehen mit einem neben der Ebene des Trockenrads 24 angeordneten, in achsparalleler Richtung bewegbaren Stößelträger 42. An diesem sind entsprechend dem vorliegend angewendeten Verfahren vier Stößel angebracht, nämlich jeweils zwei Stößel 35, 36 für die zwei gleichzeitig bearbeiteten Formkanäle 22. Der Stößelträger 42 wird von einer ortsfesten Antriebseinheit 43 betätigt.
Im Bereich der Eintrittsseite bzw. der Eintrittsöffnungen 38 der Formkanäle 22 werden demnach während einer Stillstandsphase des Trockenrads 24 einerseits zwei Packungen 10 aus den Taschen 32 aus- und über die Eintrittsöffnung 38 in den zugeordneten Formkanal 22 eingeschoben, und zwar bis zur Einschubstellung (Packung 10 im wesentlichen bündig mit der Eintrittsöffnung 38). Des Weiteren werden (in anderen, benachbarten Formkanälen 22) ebenfalls zwei Packungen 10 aus der Eingangsstellung innerhalb des Formkanals 22 in eine Austrittsstellung verschoben, vorliegend in eine Stellung bündig mit der Austrittsöffnung 39. Zwischen den Transporttakten der Packungen 10 in die Formkanäle 22, innerhalb derselben und für den Ausschub aus den Formkanälen 22 liegt vorzugsweise mindestens eine Teildrehung des Trockenrads 24. Eine Besonderheit ist der Transport der Packungen 10 beim Verlassen eines Formkanals 22 (Fig. 7). Die Packungen 10 werden jeweils von einem Abholförderer erfasst und aus dem Formkanal 22 herausgefördert. Der Abholförderer befindet sich im Bereich der Ausschubstation 34, also in Bewegungsrichtung des Trockenrads 24 vor der Übergabestation 33.
Der Abholförderer ist ein (im wesentlichen) hin- oder herbewegbares Förderorgan mit einem Mitnehmer 44 zum Erfassen der Packung 10 an einer Packungsfläche, vorliegend an der Bodenwand 19. Der Mitnehmer 44 ist mit einer Betätigungseinheit 45 verbunden, und zwar über eine Zugstange 46. Die Stange 46 wird zunächst in die Abholposition bewegt, in der der Mitnehmer 44 in den Abstand 40 zwischen den benachbarten Packungen 10 eintritt und damit an der quergerichteten Packungswand anliegt (obere Position in Fig. 7). Danach wird die Betätigungseinheit 45 entsprechend den Richtungspfeilen bewegt und damit die Packung 10 aus den beiden Formkanälen 22 herausgezogen. Zur Sicherung der Stellung der Packung 10 bei der Ausschubbewegung ist gegenüberliegend zum Mitnehmer 22 ein Anschlag 47 an der Betätigungseinheit 45 angebracht, der die Packung 10 im Bereich der Stirnwand 20 sichert.
Der Bewegungsablauf des Abholförderers 44, 45, 46 ist in Fig. 9 schematisch dargestellt. Die Bewegungsbahn ist durch Pfeil 48 (Fig. 9) wiedergegeben. Die Fördereinheit wird aus einer Ausgangsstellung außerhalb des Trockenrands 24 in die Übernahme- bzw.

Förderstellung bewegt (Fig. 7, oben). Dabei tritt der Mitnehmer 44 von Außen in den zu entleerenden Förderkanal 22 ein, und zwar in die Lücke bzw. den Abstand 40. Danach wird durch lineare Bewegung die Packung 10 aus dem Formkanal 22 herausgezogen und auf einer plattenförmigen Unterlage 49 zur Mitnahme durch den Abförderer 23 abgelegt. Der Förderer 44, 45, 46 wird abgesenkt, also aus dem Förderbereich herausbewegt und sodann in die Abförderstellung für den nachfolgenden Formkanal 22 geführt. Auch dieser Fördertakt wird durch entsprechende Ausbildung des Förderers 44, 45, 46 im Bezug auf die zwei benachbarten Formkanäle 22 der Kanalkränze 25, 26 zeitgleich durchgeführt.

Die Formkanäle 22 sind als im Querschnitt rechteckige Schächte ausgebildet, in Form und Abmessung entsprechend dem Querschnitt einer Packung 10. Diese wird im Bereich der Vorderseite 13, 14 durch eine Oberwand 50 und gegenüberliegend durch eine Unterwand 51 begrenzt. Letztere liegt an Schachtel- und Deckel-Rückwand 15, 16 an. Im Bereich der schmalen Seitenwände 17, 18 sind Kanalseitenwände 52, 53 gebildet. Die in Radialrichtung nebeneinanderliegenden Formkanäle 22 der Kanalkränze 25, 26 sind vorzugsweise übereinstimmend ausgebildet.

Eine Besonderheit besteht in der Anordnung von Ausnehmungen 54 im Bereich der Austrittsseite bzw. Austrittsöffnung 39 der Formkanäle 22. Diese Ausnehmungen 54 sind in mindestens einer der großen Wandungen 50, 51, vorzugsweise im Bereich von Oberwand 50 und Unterwand 51 angeordnet. Die Ausnehmungen 54 sind zur Austrittsöffnung 39 hin offen und erstrecken sich über die Länge einer Packung 10 und bis in den Bereich des Abstands 40. Die Ausnehmung 54 ermöglicht die Zuführung und den Eingriff es Förderers bzw. des Schiebers 37 zur Abholung der Packung 10. Die Stange 46 mit dem Mitnehmer 47 tritt über einen benachbarten, in diesem Bereich entleerten Formkanal 22 in die Entnahmeposition ein, wobei die Stange 46 im Bereich der Ausnehmung 54 einer Wandung 50, 51 liegt und der Mitnehmer über diese Ausnehmung 54 in die Mitnehmerstellung im Bereich des Abstands 40 eintritt.

Die Ausnehmung 54 ist vorzugsweise mittig im Bereich der Kanalseitenwände 52, 53 angeordnet und zum Ende hin offen. Seitlich, also zu beiden Seiten der Ausnehmung 54, sind Schenkel 55 gebildet für die Anlage der Packung 10 in der austrittsseitigen Stellung. Der Schieber 37 bzw. die Zug-Stange 46 durch achsparallele Bewegung im benachbarten Formkanal 22 und durch abschließende Querbewegung in die Abschubstellung, wobei durch die Querbewegung der Mitnehmer 44 Anlage an der freien Packungswandung - Bodenwand 19 - erhält.

Die Bewegungen der Packungen 10 im Bereich des Trockenrades 24 sind aufeinander abgestimmt. Vorliegend besteht ein erster Fördertakt aus der Einschubbewegung in einen Formkanal 22. Nachfolgend - nach mindestens einer Teildrehung des Trockenrades 24 - wird ein Fördertakt innerhalb des Formkanals 22 durchgeführt und die Packung 10 an der Austrittsseite positioniert. Danach wird die Packung 10 aus dem Formkanal 22 herausgefördert. Der Ablauf der Bewegungen ist so gesteuert, dass - der Bewegung des Trockenrades 24 folgend - zuerst die austrittsseitig positionierte Packung 10 aus dem Formkanal 22 herausbewegt und damit diese Position freigemacht wird. Danach - in Bewegungsrichtung - wird die Packung 10 aus der Eintrittsposition innerhalb des Formkanals 22 in die Austrittsposition bewegt. Dadurch wird diese Position frei. Anschließend erfolgt der Einschub einer Packung 10 in die eintrittsseitige Position. Die beiden Letztgenannten Förderbewegungen innerhalb des Formkanals 22 werden durch die entsprechend ausgebildete Schubeinheit 41 zeitgleich durchgeführt.
Eine Besonderheit sind die Maßnahmen zur Sicherstellung einer gradlinigen, hin- und hergehenden Bewegung der Stößel 35, 36, insbesondere als Schubeinheit 41. Zu dieser gehört ein Ausgleichsgetriebe 56, außerhalb des Bewegungsbereichs des Trockenrades 24, mit dem Ziel, eine exakte hin- hergehende Linearbewegung der Stößel 35, 36 zu gewährleisten. Das Ausgleichsgetriebe besteht aus einem achsparallel gelagerten Tragteil 57, welches vorliegend am Außenumfang des Trockenrades 24 mit geringem Abstand von diesem positioniert ist. Mit dem Tragteil 57 sind die Stößel 35,36 verbunden, und zwar über (horizontale und vertikale) Tragstangen 58, 59. Das Tragteil 57 wird durch ein Antriebsorgan von einem nichtgezeigtem Antrieb bewegt, vorliegend durch eine Zug- und Schubstange 60.
Das Tragteil 57 ist in besonderer Weise gelagert, um die exakte Linearbewegung sicherzustellen. Es handelt sich dabei insbesondere ausschließlich um Hebel, vorliegend um zwei im Abstand voneinander angeordnete Hebeleinheiten 61, 62. Jede Einheit besteht aus einem gelenkig bzw. schwenkbar mit dem Tragteil 57 verbundenen Haupthebel 63 und zwei Ausgleichshebeln 64, 65. Diese sind (annähernd in Parallelstellung zueinander) ortsfest, schwenkbar gelagert, nämlich im Bereich von feststehenden Drehlagern 66 und über Gelenke 67 im Abstand voneinander mit einem freien, vom Tragteil 57 entfernt liegenden Gelenk 67 verbunden. Durch Betätigen des Ausgleichsgetriebes 56, nämlich durch Kraftübertragung der Zug- und Schubstange 60, werden demnach die Stößel 35 in der beschriebenen Weise hin- und hergehend bewegt.

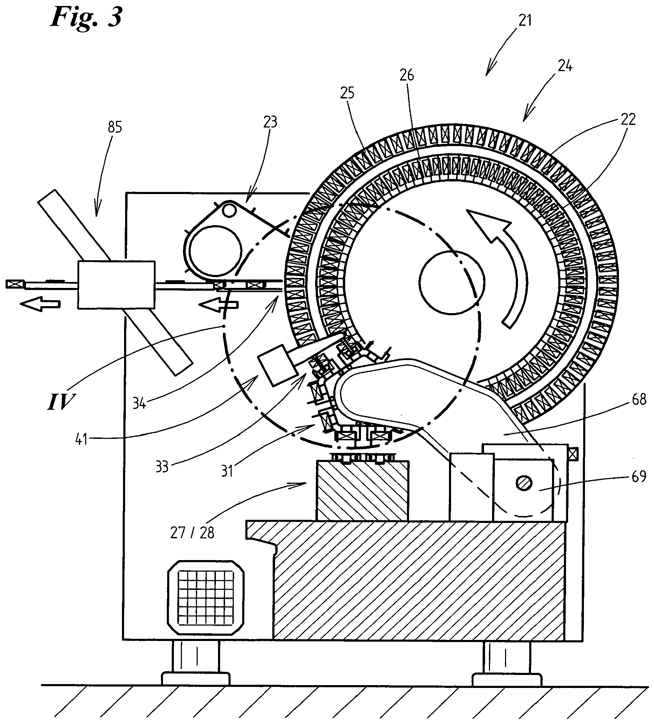

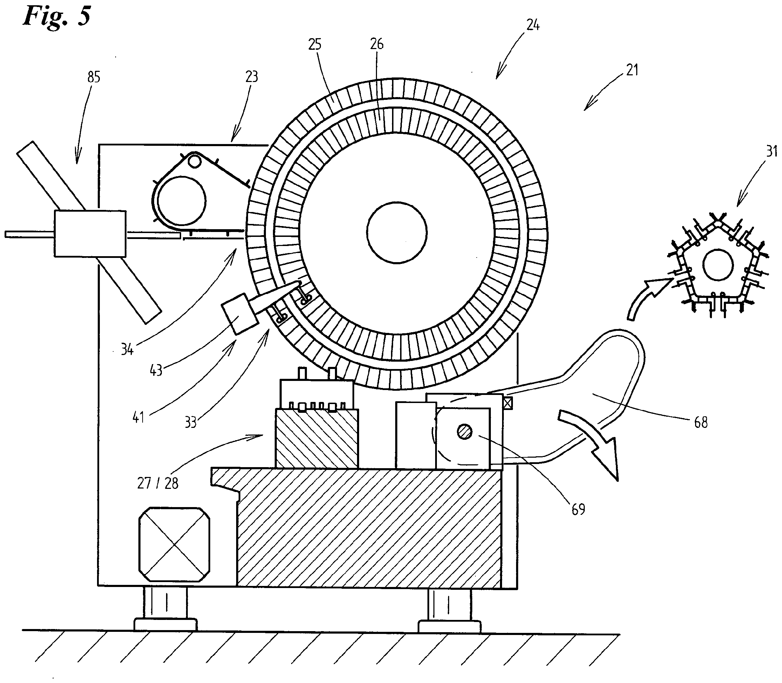

Eine weitere Besonderheit ist die Schaffung von Voraussetzungen für eine erleichterte Wartung bzw. Anpassung der Anlage an unterschiedliche Packungen. Zu diesem Zweck ist die Übertragungseinheit für die Packungen 10 von der Packungsbahn 27, 28 an das Trockenrad 24 - Übergaberevolver 31 - verschiebbar an einem Träger angeordnet, und zwar derart, dass der Übergaberevolver 31 durch einfache Betätigung aus der Arbeitsstellung (z. B. Fig. 3, Fig. 4) in eine freie Bearbeitungsposition bewegbar ist (Fig. 5). Der Übergaberevolver 31 ist zu diesem Zweck an einem Schwenkarm 68 gelagert, der auf einem Maschinenfundament mit einem Schwenklager 69 gelagert ist. Der Schwenkarm 68 ist mit Übergaberevolver 31 um nahezu 180° schwenkbar aus der Arbeitsstellung in die Bearbeitungsposition (Fig. 5). Hier kann durch einfache Maßnahme der Übergaberevolver 31 vom Schwenkarm 68 abgenommen und beispielsweise gegen einen anderen Übergaberevolver 31 (für ein anderes Packungsformat) ausgetauscht werden.
Eine weitere Besonderheit besteht darin, dass die Formkanäle 22 hinsichtlich der Querschnittsform und/oder hinsichtlich der Querschnittsabmessungen verstellbar sind. Bei dem vorliegenden Beispiel ist eine Kanalfläche, hier eine schmale Kanalseitenwand 52, 53 mit einer Stellmechanik versehen, die eine Veränderung der Querabmessung des Formkanals 22 (wirksamer Abstand zwischen den Kanalseitenwände 52, 53) ermöglicht.
Im Bereich der einen und/oder anderen Seitenwand 52, 53 befindet sich ein verstellbares Organ, vorliegend ein Drucksteg 70, der sich vorzugsweise über die volle Länge des Formkanals 22 bzw. der zugeordneten Seitenwand 52, 53 erstreckt. Der Drucksteg 70 ist als Wandung ausgebildet und bildet mit der freien Seite die Begrenzung des Formkanals 22. Der Drucksteg 70 liegt demnach an der zugekehrten Seitenwand 17, 18 der Packung 10 an. Bei dem gezeigten Ausführungsbeispiel sind die Druckstege 70 der benachbarten Formkanäle 22 der Kanalkränze 25, 26 im Bereich der einander zugekehrten Kanalseitenwände 52, 53 angeordnet.

Die Druckstege 70 sind außerhalb des Formkanals 22 beweglich abgestützt. Zu diesem Zweck ist jeder Drucksteg 70 mit über die Länge verteilten insbesondere drei Tragbolzen 71 versehen. Diese sind an der vom Innenbereich des Formkanals 22 abgekehrten, äußeren Seite angeordnet und treten durch Bohrungen 72 in der Tragkonstruktion des Trockenrads 24 hindurch, nämlich durch einander zugekehrte Zwischenwände 73, 74 der benachbarten Formkanäle 22 bzw. der Kanalkränze 25, 26. Zwischen diesen Zwischenwänden 73, 74 befindet sich ein Zwischenraum bzw. eine Kammer 75, in die die Tragbolzen 71 eintreten.

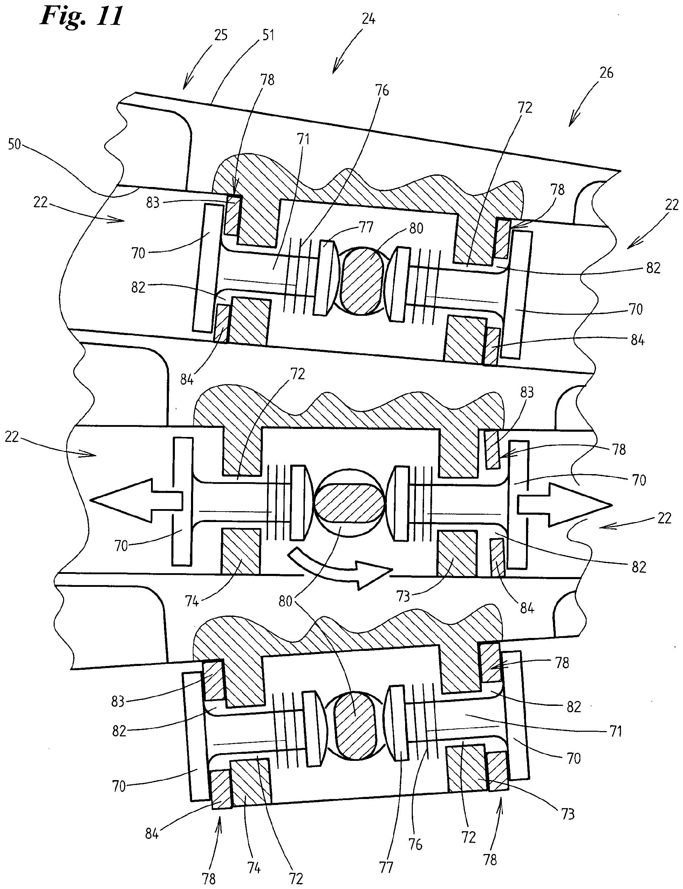

Auf jedem Tragbolzen 71 befindet sich eine Stützfeder 76, die an der Zwischenwand 73, 74 einerseits und an einem Bolzenkopf 77 andererseits abgestützt ist. Die Stützfedern 76 ermöglichen eine Querverschiebung der Druckstege 70 gegen Federbelastung
Die Relativstellung der Druckstege 70 innerhalb des jeweiligen Formkanals 22 ist veränderbar, und zwar insbesondere durch Parallelverschiebung. Soweit durch die Stellung der Druckstege 70 gegenüber den Zwischenwänden 73, 74 ein spaltförmiger Zwischenraum geschaffen ist, wird in diesen ein geeignetes Distanzstück eingeführt, welches die Relativstellung des Druckstegs 70 aufgrund der Wirkung der Stützfedern 76 bestimmt. Bei dem gezeigten Ausführungsbeispiel handelt es sich um ein langgestrecktes blechartiges Distanzstück 78, welches über eine freie Seite des Formkanals 22, vorliegend über die Eintrittsseite 38, in den Spalt zwischen Drucksteg 70 und Zwischenwand 73, 74 eingeschoben wird. Je nach Stärke bzw. Dicke des Distanzstücks 78 wird die Relativstellung des Druckstegs 70 bestimmt und damit die Querabmessung des Formkanals 22. Zur Veränderung der Stellung der Druckstege 70 ist ein besonderes Werkzeug 79 vorgesehen. Dieses besteht aus einer Drehstange 80 mit besonderem Querschnitt (insbesondere oval). An einem Ende der Drehstange 80 ist ein Handgriff 81 angebracht. Das Werkzeug 79 bzw. die Drehstange 80 wird über entsprechende Öffnungen bzw. Bohrungen 86, 87 in den Zwischenwänden 73, 74 in die Kammer 75 eingeführt, derart, dass Endbereiche der Drehstange 80 in Öffnungen bzw. Bohrungen 86, 87 drehbar gelagert sind. Die Drehstange 80 befindet sich zwischen den einander zugekehrten Enden (Bolzenkopf 77) der Tragbolzen 71 benachbarter Formkanäle 22. Diese liegen mit abgerundeten Kopfflächen an dem Werkzeug bzw. an der Drehstange 80 an, so dass durch Betätigung des Werkzeugs 79 die Tragbolzen 71 insbesondere gemeinsam beaufschlagt werden. Das Werkzeug 79 bzw. dessen Drehstange 80 ist vorzugsweise im Bereich der Kammer 75 gelagert, nämlich im Bereich von quergerichteten Schenkeln der Zwischenwände 73, 74, die jeweils die Bohrungen 86, 87, als Drehlager für die Drehstange 80 bilden.
Bei der Einführung des Werkzeugs 79 ist die Drehstange 80 so positioniert, dass die Tragbolzen 71 bzw. die Bolzenköpfe 77 an Bereichen mit geringem Querschnitt anliegen (Fig. 11, oben). Die Tragbolzen 71 der benachbarten Formkanäle 22 befinden sich in Abstützung an dem Distanzstück 78. Durch Stellungsänderung der Drehstange 80 wird der größere bzw. volle Querschnitt der Drehstange 80 wirksam. Die Bolzen 71 werden auseinander bewegt - gegen den Druck der Stützfedern 76 - und dadurch die Druckstege 70 nach innen in den Formkanal 22 bewegt (Fig. 11, Mitte). Es kann nun ein anderes, z. B. größeres Distanzstück 78 in Position gebracht werden (Fig. 11, unten). Durch Rückdrehung der Drehstange 80 kommen die Tragbolzen 71 frei, so dass die Druckstege 70 bis zur Anlage an dem (neuen) Distanzstück 78 verschoben werden.

Die Distanzstücke 78 sind in besonderer Weise ausgebildet, nämlich als langgestreckte Bleche mit einem Längsschlitz 82. Das dadurch gabelförmige Distanzstück 78 kann in Längsrichtung in den Formkanal 22 eingeschoben werden, so dass Distanzstege 83, 84 zu beiden Seiten der Tragbolzen 71 im Wesentlichen über die gesamte Länge der Druckstege 70 verlaufen. An den Enden der Distanzstücke 78 sind durch winkelförmige Ausbildung Betätigungsgriffe angeordnet.

Die vorstehend ausgebildete Mechanik zur Veränderung der Querabmessungen des Formkanals 22 können auch zusätzlich oder alternativ für andere Wandungsbereiche eingesetzt werden.

Die mit der so ausgebildeten Vorrichtung fertiggestellten Packungen 10 werden durch den Abförderer 23 einem abschließenden Prüfaggregat 85 zugeführt zur Kontrolle der exakten äußeren Struktur.

### Bezugszeichenliste:

| | | | | | |
|---|---|---|---|---|---|
| 10 | Packung | 46 | (Zug-)Stange | 83 | Distanzsteg |
| 11 | Schachtelteil | 47 | Anschlag | 84 | Distanzsteg |
| 12 | Deckel | 48 | Pfeil | 85 | Prüfungsaggregat |
| 13 | Schachtel-Vorderwand | 49 | Unterlage | 86 | Bohrung |
| | | 50 | Oberwand | 87 | Bohrung |
| 14 | Deckel-Vorderwand | 51 | Unterwand | | |
| 15 | Schachtel-Rückwand | 52 | Kanalseitenwand | | |
| 16 | Deckel-Rückwand | 53 | Kanalseitenwand | | |
| 17 | Seitenwand | 54 | Ausnehmung | | |
| 18 | Seitenwand | 55 | Schenkel | | |
| 19 | Bodenwand | 56 | Ausgleichsgetriebe | | |
| 20 | Stirnwand | 57 | Tragteil | | |
| 21 | Form- und Trockenstation | 58 | Tragstange | | |
| | | 59 | Tragstange | | |
| 22 | Formkanal | 60 | Zug- und Schubstange | | |
| 23 | Abförderer | | | | |
| 24 | Trockenrad | 61 | Hebeleinheit | | |
| 25 | Kanalkranz | 62 | Hebeleinheit | | |
| 26 | Kanalkranz | 63 | Haupthebel | | |
| 27 | Packungsbahn | 64 | Ausgleichshebel | | |
| 28 | Packungsbahn | 65 | Ausgleichshebel | | |
| 29 | Leimrad | 66 | Drehlager | | |
| 30 | Beleimungsstation | 67 | Gelenk | | |
| 31 | Übergaberevolver | 68 | Schwenkarm | | |
| 32 | Tasche | 69 | Schwenklager | | |
| 33 | Übergabestation | 70 | Drucksteg | | |
| 34 | Ausschubstation | 71 | Tragbolzen | | |
| 35 | Stößel | 72 | Bohrung | | |
| 36 | Stößel | 73 | Zwischenwand | | |
| 37 | Schieber | 74 | Zwischenwand | | |
| 38 | Eintrittsöffnung | 75 | Kammer | | |
| 39 | Austrittsöffnung | 76 | Stützfeder | | |
| 40 | Abstand | 77 | Bolzenkopf | | |
| 41 | Schubeinheit | 78 | Distanzstück | | |
| 42 | Stößelträger | 79 | Werkzeug | | |
| 43 | Antriebseinheit | 80 | Drehstange | | |
| 44 | Mitnehmer | 81 | Handgriff | | |
| 45 | Betätigungseinheit | 82 | Längsschlitz | | |

## Patentansprüche

1. Verfahren zur Formgebung bzw. Formstabilisierung von Packungen (10) mit durch Leim verbundenen Faltlappen, insbesondere von quaderförmigen Zigarettenpackungen - des Typs Klappschachtel aus insbesondere dünnem Karton, von denen jeweils mehrere aufeinanderfolgend durch einen formgebenden Kanal, also durch einen Formkanal (22), hindurch transportiert werden, der die Packungen (10) an mehreren Seiten umgibt und mit formgebenden Kanalwandungen an den Packungen (10) anliegt, vorzugsweise an Vorderwand (13, 14), Rückwand (15, 16) und schmalen, langgestreckten Seitenwänden (17, 18), wobei die Packungen (10) aufeinanderfolgend durch Einschieben mittels Schuborgan (35) über eine Eintrittsseite bzw. Eintrittsöffnung (38) in den Formkanal (22) eingeführt und über eine Austrittsöffnung (39) aus diesem ausgeschoben werden, und wobei mehrere Formkanäle (22) an einem drehbaren endlosen Trockenförderer, insbesondere an einem Trockenrad (24), angebracht sind, **gekennzeichnet durch** folgende Merkmale:
a) die Packungen (10) werden drucklos ohne wechselseitige Abstützung und mit einem Abstand (40) voneinander durch den Formkanal (22) taktweise hindurchtransportiert,
b) auf der zur Eintrittsöffnung (38) gegenüberliegenden Seite werden die Packungen (10) durch ein gesondertes Förderorgan aus dem Formkanal (22) über die Austrittsöffnung (39) herausbewegt, vorzugsweise nach mehreren Drehungen des Trockenförderers, insbesondere des Trockenrades (24).

2. Verfahren nach Anspruch 1, **dadurch gekennzeichnet, dass** die vorzugsweise quaderförmigen Packungen (10) durch mindestens ein Schuborgan, nachfolgend: Stößel (35, 36), durch Übertragung von Druck auf eine quergerichtete, rückseitige Packungswandung, vorzugsweise auf eine Bodenwand (19) oder eine Stirnwand (20) einer Klappschachtel, in den Formkanal (22) eingeschoben und nach Beendigung des Formgebungsprozesses an der gegenüberliegenden Seite des Formkanals durch ein gesondertes Förderorgan, nämlich durch eine Antriebseinheit (43) mit Mitnehmern (44) zum Erfassen der Packung (10) ebenfalls an der rückwärtigen Packungsseite aus dem Formkanal (22) herausgefördert wird, wobei mehrere Packungen (10) innerhalb des Formkanals (22) einen Abstand (40) voneinander aufweisen und vorzugsweise mindestens zwei Fördertakte der Packungen (10) innerhalb eines Formkanals (22) über die Eintrittsöffnung (38) und mindestens ein weiterer Fördertakt, nämlich der Ausschubtakt der Packungen (10) aus dem Formkanal (22), über die Austrittsöffnung (39) bewirkt werden.

3. Verfahren nach Anspruch 1 oder 2, **dadurch gekennzeichnet, dass** Fördertakte der Packungen (10) in die Formkanäle (22) hinein, innerhalb derselben, sowie aus den Formkanälen (22) heraus in aufeinanderfolgenden Stationen der Drehbewegung des Trockenförderers, insbesondere des Trockenrades (24), erfolgen, derart, dass in einer ersten Station, insbesondere in einer Ausschubstation (34), Packungen (10) über die Austrittsöffnung (39) aus dem Formkanal (22) herausgefördert, in einer nachfolgenden, ersten Übergabestation (33) Packungen (10) aus einer Eintrittsstellung in eine weitere, nachfolgende Stellung innerhalb des Formkanals (22) bewegbar und dass schließlich in einer weiteren Stellung der Übergabestation (33) Packungen (10) in den Formkanal (22) eingeschoben werden, vorzugsweise durch Übernahme von einem Übergaberevolver (31), wobei vorzugsweise die Einschubbewegung von Packungen (10) in die Formkanäle (22) im Bereich der Übergabestation (33) und ein nachfolgender Fördertakt, insbesondere von der Eintrittsstellung in die Austrittsstellung, durch gemeinsamen Fördertaktdurch eine Schubeinheit (41) ausgeführt werden.

4. Verfahren nach Anspruch 1 oder einem der vorhergehenden Ansprüche, **dadurch gekennzeichnet, dass** die austrittsseitig in einem Formkanal (22) positionierten Packungen (10) über einen Förderer, nämlich eine Betätigungseinheit (45), ausschiebbar sind, wobei die Betätigungseinheit (45) über einen benachbarten, bereits teilweise entleerten Formkanal (22) in die Förderstellung zum Abtransport der Packung (10) gebracht wird.

5. Verfahren nach Anspruch 1 oder einem der vorhergehenden Ansprüche, **dadurch gekennzeichnet, dass** die Formkanäle (22) hinsichtlich Querschnitts-Form und/oder Abmessung, insbesondere hinsichtlich der Breite, verstellbar sind, vorzugsweise durch Querverschieben einer Kanalseitenwand (52, 53) bzw. eines Teils derselben.

6. Vorrichtung zur Formgebung bzw. Formstabilisierung von Packungen (10), die durch Leim miteinander verbundene Faltlappen aufweisen, insbesondere quaderförmige Zigarettenpackungen des Typs Klappschachtel aus dünnem Karton, wobei mehrere formgebende Kanäle bzw. Taschen, also Formkanäle (22), an einem Endlosförderer, insbesondere an einem Trockenrad (24), angeordnet und die Packungen (10) in Längsrichtung durch die Formkanäle (22) taktweise hindurchförderbar sind bis zum Aushärten der Leimverbindungen, **gekennzeichnet durch** folgende Merkmale:
a) im Bereich einer Übergabestation (33) sind vorzugsweise zwei Packungen (10) durch eine Schubeinheit (41) in vorzugsweise zwei Formkanäle (22) einschiebbar,
b) die Packungen (10) sind innerhalb der Formkanäle (22) um mindestens einen weiteren Fördertakt bewegbar, vorzugsweise durch die entsprechend ausgebildete Schubeinheit (41),
c) die Packungen (10) werden im Bereich einer Ausschubstation (34) durch gesonderte Betätigungseinheiten (45) über eine Austrittsöffnung (39) aus den Formkanälen (22) herausgefördert,
d) die Organe für den taktweisen Förderantrieb der Packungen (10) sind so ausgebildet bzw. bemessen, dass mehrere, insbesondere zwei innerhalb eines Formkanals (22) nebeneinanderliegende Packungen (10) druckfrei und mit Abstand voneinander transportierbar sind.

7. Vorrichtung nach Anspruch 6, **dadurch gekennzeichnet, dass** das Trockenrad (24) mehrere, insbesondere zwei konzentrische Kanalkränze (25, 26) aufweist, je mit derselben Anzahl von achsparallelen Formkanälen (22), wobei die benachbarten Formkanäle (22) der Kanalkränze (25, 26) in Radialrichtung aufeinander ausgerichtet sind und durch gemeinsame Förder- bzw. Schuborgane im Bereich der Übergabestation (33) beschickt und im Bereich der Ausschubstation (34) entleert werden.

8. Vorrichtung nach Anspruch 6 oder 7, **dadurch gekennzeichnet, dass** in einer Förderstation für die Packungen (10), in der gemeinsamen Übergabestation (33) durch eine gemeinsame Schubeinheit (41) in einem Fördertakt zwei Packungen (10) in nebeneinanderliegende Formkanäle (22) einschiebbar und zwei weitere Packungen (10) innerhalb von benachbarten Formkanälen (22) um einen Fördertakt weiterbewegbar sind, wobei die Schubeinheit (41) jeweils einer Packung (10) zugeordnete Stößel (35, 36) in unterschiedlicher Relativstellung aufweist für die Durchführung der Fördertakte und wobei weiterhin vorzugsweise eine Übergabevorrichtung für Packungen (10), insbesondere ein Übergaberevolver (31) mit vorzugsweise zwei nebeneinanderliegenden Taschen (32) in einer Ebene unmittelbar benachbart zum Trockenrad (24) gelagert ist, derart, dass aufgrund entsprechender Relativstellung der Taschen (32) mit einem ersten Fördertakt zwei Packungen (10) aus den Taschen (32) ausschiebbar und in unmittelbar benachbarte Formkanäle (22) einschiebbar und in einer eintrittsseitigen ersten Position ablegbar sind.

9. Vorrichtung nach Anspruch 6 oder einem der vorhergehenden Ansprüche, **dadurch gekennzeichnet, dass** dem Trockenrad (24) mit vorzugsweise zwei Kanalkränzen (25, 26) Übergabestation (33) und Ausschubstation (34) an unterschiedlichen Positionen, bezogen auf die Drehbewegung des Trockenrads (24), zugeordnet sind, nämlich derart, dass in Förderrichtung der Formkanäle (22) zuerst im Bereich der Ausschubstation (34) einer Austrittsöffnung (39) zugeordnete Packungen (10) aus den Formkanälen (22) herausgefördert werden und in Bewegungsrichtung der Formkanäle (22) nachfolgend in der Übergabestation (33) in einem ersten Fördertakt Packungen (10) aus einer Einschubstellung in die Ausschubstellung und in einer nachfolgenden Position Packungen (10) in die Formkanäle (22) einschiebbar sind.

10. Vorrichtung nach Anspruch 6 oder einem der vorhergehenden Ansprüche, **dadurch gekennzeichnet, dass** die im Querschnitt geschlossenen Formkanäle (22) mit Oberwand (50), Unterwand (51) und Kanalseitenwänden (52, 53) im Bereich der Austrittsöffnung (39) mindestens eine Ausnehmung (54) in mindestens einer Wandung des Formkanals (22) aufweisen, insbesondere je im Bereich der Oberwand (50) und Unterwand (51), wobei sich die Ausnehmungen (54) über einen Bereich erstrecken, der etwas länger ist als die Längsabmessung einer Packung (10), derart dass im Bereich einer quergerichteten Wandung der Packung (10), insbesondere im Bereich einer Bodenwand (19), ein freier Bereich der Ausnehmung (54) gebildet ist, in die die Betätigungseinheit (45) zum Abtransport der Packungen (10) eintritt, vorzugsweise mit einem Mitnehmer (44), wobei vorzugsweise der Austrittsöffnung (39) zugekehrte Packungen (10) durch die an der Austrittsseite im Bereich der Ausschubstation (34) angebrachte ortsfeste Betätigungseinheit (45) aus den Formkanälen (22) herausförderbar sind, insbesondere mit einer Zugstange (46) und einem Mitnehmer (44), der für den Abtransport die Packung (10) an der innenseitigen Bodenwand (19) erfasst, wobei das Betätigungsorgan in der Ausführung einer Stange (46) mit Mitnehmern (44) über einen in Bewegungsrichtung des Trockenrades (24) der Ausschubstation (34) vorgeordneten im austrittsseitigen Bereich entleerten Formkanal (22) in die Mitnahmeposition für die Packung (10) bewegbar ist.

11. Vorrichtung nach Anspruch 6 oder einem der vorhergehenden Ansprüche, **dadurch gekennzeichnet, dass** das Organ zur Übergabe der Packungen (10) von einer Packungsbahn (27, 28) an das Trockenrad (24), insbesondere der Übergaberevolver (31), an einer verstellbaren Halterung oder verstellbar an der Halterung angebracht ist, insbesondere an einem Schwenkarm (68), durch den der Übergaberevolver (31) in eine vom Trockenrad (24) entfernte Handhabungsstellung schwenkbar ist.

12. Vorrichtung nach Anspruch 6 oder einem der vorhergehenden Ansprüche, **dadurch gekennzeichnet, dass** Förderorgane für die Packungen (10), insbesondere die Schubeinheit (41) mit den Stößeln (35, 36) an einem Lineargetriebe bzw. an einem Ausgleichsgetriebe (56) gelagert ist, dass aus mindestens einem Tragteil (57) für die Förderorgane (35, 36) und vorzugsweise zwei Hebeleinheiten (61, 62) besteht, insbesondere jeweils mit einem schwenkbaren Haupthebel (63) und ortsfesten, ebenfalls schwenkbaren Ausgleichshebeln (64, 65), die mit einem freien Ende des Haupthebels (63) verbunden sind.

13. Vorrichtung nach Anspruch 6 oder einem der vorhergehenden Ansprüche, **dadurch gekennzeichnet, dass** die Formkanäle (22) hinsichtlich der Abmessungen durch verstellbare Begrenzungsorgane veränderbar sind, insbesondere durch mindestens einen Drucksteg (70) in jedem Formkanal (22), wobei vorzugsweise ein langgestreckter, streifenförmiger Drucksteg (70) im Bereich mindestens einer Seitenwand (52, 53) eines Formkanals (22) angeordnet ist und der Drucksteg (70) hinsichtlich der Relativstellung innerhalb des Formkanals (22) verstellbar ist unter Veränderung der entsprechenden Abmessung des Formkanals (22).

14. Vorrichtung nach Anspruch 13 oder einem der vorhergehenden Ansprüche, **dadurch gekennzeichnet, dass** die Druckstege (70) mittels Führungsorganen, insbesondere mit Tragbolzen (71), in Seitenwänden der Formkanäle (22) verschiebbar gelagert sind, vorzugsweise in den einander zugekehrten Seitenwänden (52, 53) der in Radialrichtung des Trockenrads (24) benachbarten Formkanäle (22), wobei vorzugsweise die Führungsorgane bzw. Tragbolzen (71) in zwischen dem benachbarten Formkanälen (22) angeordneten Zwischenwänden (73, 74) federelastisch gelagert sind.

15. Vorrichtung nach Anspruch 13 oder einem der vorhergehenden Ansprüche, **dadurch gekennzeichnet, dass** die Druckstege (70) von außerhalb des Trockenrades (24) verstellbar sind, insbesondere durch ein Werkzeug (79), welches mit einem Arbeitsteil, insbesondere einer Drehstange (80), auf die Tragbolzen (71) für die Druckstege (70) der benachbarten Formkanäle (22) einwirkt zur Verstellung derselben, wobei vorzugsweise die Stellung des Druckstegs (70) innerhalb des Formkanals (22) durch Distanzstücke (28) fixiert ist, die vorzugsweise als dünnwandige, langgestreckte Abstandshalter zwischen den Druckstegen (70) einerseits und den Zwischenwänden (73, 74) andererseits positioniert sind und die durch die Wandungsdicke die Relativstellung des Dreckstegs (70) bestimmen.

## Claims

1. Method for shaping or stabilizing the shape of packs (10) having folding tabs which are joined by glue, in particular hinge lid type cuboid-shaped cigarette packs produced from in particular thin cardboard, of which in each case several are conveyed successively through a shaping channel, that is to say a forming channel (22), which surrounds the packs (10) on several sides and abuts against the packs (10) by way of shaping channel walls, preferably against a front wall (13, 14), rear wall (15, 16) and narrow, elongated side walls (17, 18), wherein the packs (10) are successively inserted into the forming channel (22) as a result of being pushed-in by means of pushing member (35) via an inlet side or inlet opening (38) and are pushed out of the forming channel (22) via an outlet opening (39), and wherein a plurality of forming channels (22) are arranged on a rotatable endless drying conveyor, in particular on a drying wheel (24), **characterized by** the following features:
a) the packs (10) are conveyed through the forming channel (22) in cycles in a pressureless manner without two-way support and at a spacing (40) from one another,
b) the packs (10) are moved by means of a separate conveying member out of the forming channel (22) via the outlet opening (39) on the side opposite the inlet opening (38), preferably after several rotations of the drying conveyor, in particular of the drying wheel (24).

2. Method according to Claim 1, **characterized in that** the preferably cuboid-shaped packs (10) are pushed into the forming channel (22) by means of at least one pushing member, in the following: pusher (35, 36), as a result of transferring pressure onto a transversely-directed, rear pack wall, preferably onto a bottom wall (19) or an end face wall (20) of a hinge lid pack and, once the shaping process has finished, are conveyed out of the forming channel (22) on the opposite side of the forming channel by a separate conveying member, namely by a drive unit (43) with entrainment means (44) for grasping the pack (10) also on the rear side of the pack, wherein several packs (10) are at a spacing (40) from one another inside the forming channel (22) and preferably at least two conveying cycles of the packs (10) are effected inside a forming channel (22) via the inlet opening (38) and at least one further conveying cycle, namely the eject cycle of the packs (10) out of the forming channel (22), is effected via the outlet opening (39).

3. Method according to Claim 1 or 2, **characterized in that** conveying cycles of the packs (10) into the forming channels (22), inside said forming channels (22) as well as out of the forming channels (22) are effected in consecutive stations of the rotational movement of the drying conveyor, in particular of the drying wheel (24), in such a manner that in a first station, in particular in an eject station (34), packs (10) are conveyed out of the forming channel (22) via the outlet opening (39), in a following, first transfer station (33) packs (10) are movable from an inlet position into a further following position inside the forming channel (22) and **in that** finally in a further position of the transfer station (33) packs (10) are pushed into the forming channel (22), preferably as a result of being taken over by a transfer turret (31), wherein preferably the push-in movement of packs (10) into the forming channels (22) in the region of the transfer station (33) and a following conveying cycle, in particular from the inlet position into the outlet position, are carried out as a result of common conveying cycle by means of a pushing unit (41).

4. Method according to Claim 1 or one of the preceding claims, **characterized in that** the packs (10) which are positioned on the outlet side in a forming channel (22) can be pushed out by means of a conveyor, namely an actuating unit (45), wherein the actuating unit (45) is moved by means of an adjacent, already partially emptied forming channel (22) into the conveying position for removal of the pack (10).

5. Method according to Claim 1 or one of the preceding claims, **characterized in that** the forming channels (22) are adjustable with regard to cross-sectional shape and/or dimension, in particular with regard to the width, preferably as a result of lateral displacement of a channel side wall (52, 53) or of part of the same.

6. Device for shaping or stabilizing the shape of packs (10) which comprise folding tabs which are joined together by glue, in particular hinge lid type, cuboid-shaped cigarette packs which are produced from (thin) cardboard, wherein several shaping channels or pockets, in other words, forming channels (22), are arranged on an endless conveyor, in particular on a drying wheel (24), and the packs (10) are conveyable in cycles through the forming channels (22) in the longitudinal direction until the glued joints harden, **characterized by** the following features:
a) preferably two packs (10) are pushable by a pusher unit (41) into preferably two forming channels (22) in the region of a transfer station (33),
b) the packs (10) are movable inside the forming channels (22) by at least one further conveying cycle, preferably by means of the correspondingly realized pusher unit (41),
c) the packs (10) are conveyed out of the forming channels (22) via an outlet opening (39) by means of separate actuating units (45) in the region of an eject station (34),
d) the members for the cyclic conveying drive of the packs (10) are realized or dimensioned such that several, in particular two, packs (10) which are adjacent inside a forming channel (22) are conveyable in a pressure-free manner and at a spacing from one another.

7. Device according to Claim 6, **characterized in that** the drying wheel (24) comprises several, in particular two concentric channel rings (25, 26), each with the same number of axially-parallel forming channels (22), wherein the adjacent forming channels (22) of the channel rings (25, 26) are aligned one above another in the radial direction and are charged in the region of the transfer station (33) by means of common conveying or pushing members and are emptied in the region of the eject station (34).

8. Device according to Claim 6 or 7, **characterized in that** in a conveying station for the packs (10) in the common transfer station (33), two packs (10) are pushable by a common pusher unit (41) in one conveying cycle into adjacent forming channels (22) and two further packs (10) are movable further inside adjacent other forming channels (22) by a conveying cycle, wherein the pusher unit (41) comprises pushers (35, 36) which are associated in each case with one pack (10) in a different relative position for the execution of the conveying cycles, and wherein preferably in addition a transfer device for packs (10), in particular a transfer turret (31), preferably having two pockets (32) which are located side by side, is mounted in one plane directly adjacent the drying wheel (24) in such a manner that on account of a corresponding relative position of the pockets (32), two packs (10) are ejectable from the pockets (32) with a first conveying cycle and are pushable into directly adjacent forming channels (22) and are depositable in a first position on the inlet side.

9. Device according to Claim 6 or to one of the preceding claims, **characterized in that** the drying wheel (24) having preferably two channel rings (25, 26) has associated therewith a transfer station (33) and an eject station (34) at different positions with reference to the rotation of the drying wheel (24), namely in such a manner that packs (10) associated with an outlet opening (39) are conveyed out of the forming channels (22) initially in the region of the eject station (34) in the conveying direction of the forming channels (22) and in a first conveying cycle subsequently in the transfer station (33) in the direction of movement of the forming channels (22) packs (10) are pushable out of a pushing-in position into the eject position and in a subsequent position packs (10) are pushable into the forming channels (22).

10. Device according to Claim 6 or to one of the preceding claims, **characterized in that** the forming channels (22), which are closed in cross section having a top wall (50), bottom wall (51) and channel side walls (52, 53), comprise in the region of the outlet opening (39) at least one recess (54) in at least one wall of the forming channel (22), in particular one each in the region of the top wall (50) and bottom wall (51), wherein the recesses (54) extend over a region which is somewhat longer than the longitudinal dimension of a pack (10) in such a manner that in the region of a transversely directed wall of the pack (10), in particular in the region of a bottom wall (19), a free region of the recess (54) is formed in which the actuating unit (45) enters for removing the packs (10), preferably with an entrainment means (44), wherein preferably packs (10) facing the outlet opening (39) are conveyable by means of the fixed actuating unit (45), which is mounted on the outlet side in the region of the eject station (34), out of the forming channels (22), in particular by way of a pull rod (46) and an entrainment means (44) which grasps the pack (10) by the inside bottom wall (19) for removal, wherein the actuating member in the embodiment of a rod (46) with entrainment means (44) is movable into the entrainment position for the pack (10) by means of a forming channel (22) which is connected upstream of the eject station (34) in the direction of movement of the drying wheel (24) and has been emptied in the region on the outlet side.

11. Device according to Claim 6 or to one of the preceding claims, **characterized in that** the member for transferring the packs (10) from a pack track (27, 28) to the drying wheel (24), in particular the transfer turret (31), is mounted on an adjustable holder or is mounted on the holder so as to be adjustable, in particular on a pivot arm (68), by means of which the transfer turret (31) is pivotable into a handling position removed from the drying wheel (24).

12. Device according to Claim 6 or to one of the preceding claims, **characterized in that** the conveying members for the packs (10), in particular the pusher unit (41) with the pushers (35, 36), is mounted on a linear gear unit or on a differential gear unit (56) which consists of at least one support part (57) for the conveying members (35, 36) and preferably two lever units (61, 62), in particular in each case with a pivotable main lever (63) and fixed, also pivotable differential levers (64, 65) which are connected to a free end of the main lever (63).

13. Device according to Claim 6 or to one of the preceding claims, **characterized in that** the forming channels (22) are modifiable with respect to the dimensions by means of adjustable delimiting members, in particular by at least one pressure web (70) in each forming channel (22), wherein preferably an elongated, strip-shaped pressure web (70) is arranged in the region of at least one side wall (52, 53) of a forming channel (22) and the pressure web (70) is adjustable inside the forming channel (22) with respect to the relative position thus modifying the corresponding dimension of the forming channel (22).

14. Device according to Claim 13 or to one of the preceding claims, **characterized in that** the pressure webs (70) are displaceably mounted by means of guide members, in particular with support bolts (71), in side walls of the forming channels (22), preferably in the side walls (52, 53) which face one another of the forming channels (22) adjacent in the radial direction of the drying wheel (24), wherein the guide members or support bolts (71) are preferably mounted in a resiliently elastic manner in partition walls (73, 74) which are arranged between the adjacent forming channels (22).

15. Device according to Claim 13 or to one of the preceding claims, **characterized in that** the pressure webs (70) are adjustable from outside the drying wheel (24), in particular by means of a tool (79) which acts by way of an operating part, in particular a rotary rod (80), on the support bolts (71) for the pressure webs (70) of the adjacent forming channels (22) for adjusting the same, wherein preferably the position of the pressure web (70) inside the forming channel (22) is fixed by distance pieces (28) which are positioned preferably as thin-walled, elongated spacers between the pressure webs (70) on the one side and the partition walls (73, 74) on the other side and which determine the relative position of the pressure web (70) as a result of the wall thickness.

## Revendications

1. Procédé de mise en forme ou de stabilisation de la forme d'emballages (10) avec des volets de pliage assemblés par collage, en particulier d'emballages parallélépipédiques de cigarettes du type boite à rabat en particulier en carton mince, dont chaque fois plusieurs sont transportés à la suite l'un de l'autre à travers un canal de mise en forme, donc à travers un canal de formage (22), qui entoure les emballages (10) sur plusieurs côtés et qui s'applique sur les emballages (10) par des parois du canal de mise en forme, de préférence sur la paroi avant (13, 14), la paroi arrière (15, 16) et des parois latérales étroites allongées (17, 18), dans lequel on introduit les emballages (10) l'un à la suite de l'autre dans le canal de formage (22) par insertion au moyen d'un organe de poussée (35) par un côté d'entrée ou une ouverture d'entrée (38) et on les extrait hors de celui-ci par une ouverture de sortie (39), et dans lequel plusieurs canaux de formage (22) sont pratiqués sur un transporteur de séchage rotatif sans fin, en particulier sur une roue de séchage (24), **caractérisé par** les caractéristiques suivantes:
a) on transporte les emballages (10) pas à pas sans pression et sans appui mutuel et avec une distance l'un de l'autre à travers le canal de formage (22),
b) sur le côté opposé à l'ouverture d'entrée (38), on évacue les emballages (10) au moyen d'un organe de transport séparé hors du canal de formage (22) par l'ouverture de sortie (39), de préférence après plusieurs rotations du transporteur de séchage, en particulier de la roue de séchage (24).

2. Procédé selon la revendication 1, **caractérisé en ce que** l'on insère les emballages (10) de préférence parallélépipédiques dans le canal de formage (22) au moyen d'au moins un organe de poussée, appelé dans la suite poussoir (35, 36), par la transmission de pression sur une paroi transversale arrière de l'emballage, de préférence sur une paroi de fond (19) ou une paroi frontale (20) d'une boîte à rabat et, après la fin du processus de mise en forme, on les évacue hors du canal de formage (22) sur le côté opposé du canal de formage au moyen d'un organe de transport séparé, à savoir au moyen d'une unité d'entraînement (43) avec des éléments d'entraînement (44) pour saisir l'emballage (10) également sur le côté arrière de l'emballage, dans lequel plusieurs emballages (10) présentent à l'intérieur du canal de formage (22) une distance (40) l'un de l'autre et on exécute de préférence au moins deux pas de transport des emballages (10) à l'intérieur du canal de formage (22) via l'ouverture d'entrée (38) et au moins un autre pas de transport, à savoir le pas d'expulsion des emballages (10) hors du canal de formage (22) via l'ouverture de sortie (39).

3. Procédé selon la revendication 1 ou 2, **caractérisé en ce que** l'on effectue des pas de transport des emballages (10) vers l'intérieur des canaux de formage (22), à l'intérieur de ceux-ci ainsi que hors des canaux de formage (22) dans des stations successives du mouvement de rotation du transporteur de séchage, en particulier de la roue de séchage (24), de telle manière que dans une première station, en particulier dans une station d'expulsion (34), on transporte les emballages (10) hors du canal de formage (22) via l'ouverture de sortie (39), que dans une première station de transfert suivante (33) les emballages (10) soient déplaçables d'une position d'entrée à une autre position suivante à l'intérieur du canal de formage (22) et que finalement on insère des emballages (10) dans le canal de formage (22) dans une autre position de la station de transfert (33), de préférence par reprise à partir d'une tourelle de transfert (31), dans lequel on exécute de préférence le mouvement d'insertion d'emballages (10) dans les canaux de formage (22) dans la région de la station de transfert (33) et un pas de transport suivant, en particulier de la position d'entrée à la position de sortie, par un pas de transport commun au moyen d'une unité de poussée (41).

4. Procédé selon la revendication 1 ou l'une quelconque des revendications précédentes, **caractérisé en ce que** les emballages (10) positionnés en sortie dans un canal de formage (22) peuvent être expulsés au moyen d'un transporteur, à savoir une unité d'actionnement (45), dans lequel l'unité d'actionnement (45) est amenée dans la position de transport par un canal de formage voisin (22), déjà partiellement vidé, en vue de l'évacuation de l'emballage (10).

5. Procédé selon la revendication 1 ou l'une quelconque des revendications précédentes, **caractérisé en ce que** les canaux de formage (22) sont réglables, en ce qui concerne la forme de la section transversale et/ou les dimensions, en particulier en ce qui concerne la largeur, de préférence par un déplacement transversal d'une paroi latérale de canal (52, 53) ou d'une partie de celle-ci.

6. Dispositif pour la mise en forme ou la stabilisation de la forme d'emballages (10), qui présentent des volets de pliage assemblés par collage, en particulier d'emballages parallélépipédiques de cigarettes du type boîte à rabat en carton mince, dans lequel plusieurs canaux ou poches de mise en forme, donc des canaux de formage (22), sont disposés sur un transporteur sans fin, en particulier sur une roue de séchage (24), et les emballages (10) peuvent être transportées pas à pas en direction longitudinale à travers les canaux de formage (22) jusqu'au durcissement des assemblages collés, **caractérisé par** les caractéristiques suivantes:
a) dans la région d'une station de transfert (33), de préférence deux emballages (10) peuvent être insérés par une unité de poussée (41) de préférence dans deux canaux de formage (22),
b) les emballages (10) sont déplaçables à l'intérieur des canaux de formage (22) d'au moins un autre pas de transport, de préférence au moyen de l'unité de poussée (41) configurée de façon correspondante,
c) les emballages (10) sont expulsés hors des canaux de formage (22) via une ouverture de sortie (39) dans la région d'une station d'expulsion (34) au moyen d'unités d'actionnement séparées (45),
d) les organes assurant l'entraînement de transport pas à pas des emballages (10) sont configurés ou dimensionnés de telle manière que plusieurs, en particulier deux emballages (10) juxtaposées à l'intérieur d'un canal de formage (22) puissent être transportés sans pression et à distance l'un de l'autre.

7. Dispositif selon la revendication 6, **caractérisé en ce que** la roue de séchage (24) présente plusieurs, en particulier deux couronnes de canaux concentriques (25, 26), chacune avec le même nombre de canaux de formage parallèles à l'axe (22), dans lequel les canaux de formage voisins (22) des couronnes de canaux (25, 26) sont orientés en direction radiale l'un vers l'autre et sont garnis dans la région de la station de transfert (33) et vidés dans la région de la station d'expulsion (34) au moyen d'organes de transport ou de poussée communs.

8. Dispositif selon la revendication 6 ou 7, **caractérisé en ce que** dans une station de transport pour les emballages (10), deux emballages (10) peuvent être insérés dans la station de transfert commune (33) dans des canaux de formage juxtaposés (22) en un pas de transport au moyen d'une unité de poussée commune (41) et deux autres emballages (10) peuvent être avancés d'un pas de transport à l'intérieur de canaux de formage voisins (22), dans lequel l'unité de poussée (41) présente des poussoirs (35, 36) respectivement associés à un emballage (10) dans une position relative différente pour l'exécution des pas de transport et dans lequel en outre de préférence un dispositif de transfert pour des emballages (10), en particulier une tourelle de transfert (31) avec de préférence deux poches juxtaposées (32) est disposé dans un plan à proximité immédiate de la roue de séchage (24), de telle manière qu'en raison de la position relative correspondante des poches (32), deux emballages (10) puissent être expulsés hors des poches (32) dans un premier pas de transport et être insérés dans des canaux de formage (22) immédiatement voisins et puissent être déposés dans une première position du côté de l'entrée.

9. Dispositif selon la revendication 6 ou l'une quelconque des revendications précédentes, **caractérisé en ce qu'**une station de transfert (33) et une station d'expulsion (34) sont associées, dans des positions différentes par rapport au mouvement de rotation de la roue de séchage (24), à la roue de séchage (24) avec de préférence deux couronnes de canaux (25, 26), à savoir de telle manière que, dans la direction de transport des canaux de formage (22), d'abord dans la région de la station d'expulsion (34) des emballages (10) associées à une ouverture de sortie (39) soient expulsés hors des canaux de formage (22) et que, dans la direction du mouvement des canaux de formage (22), des emballages (10) puissent ensuite être insérés dans la station de transfert (33) dans un premier pas de transport d'une position d'insertion à la position d'expulsion et que dans une position suivante des emballages (10) puissent être insérés dans les canaux de formage (22).

10. Dispositif selon la revendication 6 ou l'une quelconque des revendications précédentes, **caractérisé en ce que** les canaux de formage (22) de section transversale fermée avec une paroi supérieure (50), une paroi inférieure (51) et des parois latérales de canal (52, 53) présentent dans la région de l'ouverture de sortie (39) au moins un évidement (54) dans au moins une paroi du canal de formage (22), en particulier chaque fois dans la région de la paroi supérieure (50) et de la paroi inférieure (51), dans lequel les évidements (54) s'étendent sur une région qui est légèrement plus longue que la dimension de longueur d'un emballage (10), de telle manière que dans la région d'une paroi orientée transversalement de l'emballage (10), en particulier dans la région d'une paroi de fond (19), il se forme une région libre de l'évidement (54) dans lequel pénètre l'unité d'actionnement (45) pour l'évacuation des emballages (10), de préférence avec un élément d'entraînement (44), dans lequel des emballages (10) de préférence tournés vers l'ouverture de sortie (39) peuvent être expulsés hors des canaux de formage (22) au moyen de l'unité d'actionnement stationnaire (45) installée sur le côté de sortie dans la région de la station d'expulsion (34), en particulier avec une tige de traction (46) et un élément d'entraînement (44), qui saisit pour l'évacuation l'emballage (10) par la paroi de fond intérieure (19), dans lequel l'organe d'actionnement réalisé sous la forme d'une tige (46) avec des éléments d'entraînement (44) peut être déplacé, sur un canal de formage vidé (22) dans la région de sortie disposé avant la station d'expulsion (34) dans la direction du mouvement de la roue de séchage (24), jusque dans la position d'entraînement pour l'emballage (10).

11. Dispositif selon la revendication 6 ou l'une quelconque des revendications précédentes, **caractérisé en ce que** l'organe pour le transfert des emballages (10) d'une bande d'emballages (27, 28) à la roue de séchage (24), en particulier à la tourelle de transfert (31), est monté sur un support réglable ou de façon réglable sur le support, en particulier sur un bras pivotant (68), par lequel la tourelle de transfert (31) peut pivoter dans une position de manipulation éloignée de la roue de séchage (24).

12. Dispositif selon la revendication 6 ou l'une quelconque des revendications précédentes, **caractérisé en ce que** des organes de transport pour les emballages (10), en particulier l'unité de poussée (41) avec les poussoirs (35, 36), sont montés sur une transmission linéaire ou sur une transmission de compensation, qui se compose d'au moins une partie de support (57) pour les organes de transport (35, 36) et de préférence de deux unités de leviers (61, 62), en particulier chacune avec un levier principal pivotant (63) et des leviers de compensation stationnaires, également pivotants (64, 65), qui sont reliés à une extrémité libre du levier principal (63).

13. Dispositif selon la revendication 6 ou l'une quelconque des revendications précédentes, **caractérisé en ce que** les canaux de formage (22) peuvent être modifiés en ce qui concerne leurs dimensions au moyen d'organes de limitation déplaçables, en particulier au moyen d'au moins une nervure de pression (70) dans chaque canal de formage (22), dans lequel de préférence une nervure de pression allongée en forme de bande (70) est disposée dans la région d'au moins une paroi latérale (52, 53) d'un canal de formage (22) et la nervure de pression (70) est déplaçable en ce qui concerne sa position relative à l'intérieur du canal de formage (22) avec changement de la dimension correspondante du canal de formage (22).

14. Dispositif selon la revendication 13 ou l'une quelconque des revendications précédentes, **caractérisé en ce que** les nervures de pression (70) sont montées de façon déplaçable au moyen d'organes de guidage, en particulier avec des goujons de support (71), dans des parois latérales des canaux de formage (22), de préférence dans les parois latérales tournées l'une vers l'autre (52, 53) des canaux de formage (22) voisins dans la direction radiale de la roue de séchage (24), dans lequel les organes de guidage ou les goujons de support (71) sont de préférence montés sur ressorts dans des parois intermédiaires (73, 74) disposées entre les canaux de formage voisins (22).

15. Dispositif selon la revendication 13 ou l'une quelconque des revendications précédentes, **caractérisé en ce que** les nervures de pression (70) sont déplaçables depuis l'extérieur de la roue de séchage (24), en particulier au moyen d'un outil (79), qui agit avec une partie de travail, en particulier une tige tournante (80), sur les goujons de support (71) pour les nervures de pression (70) des canaux de formage voisins (22) pour le déplacement de celles-ci, dans lequel la position de la nervure de pression (70) à l'intérieur du canal de formage (22) est de préférence fixée au moyen de pièces d'écartement (28), qui sont positionnées de préférence sous la forme d'éléments d'écartement minces allongés entre les nervures de pression (70) d'une part et les parois intermédiaires (73, 74) d'autre part, et qui déterminent au moyen de l'épaisseur des parois la position relative de la nervure de pression (70).
